# EUROPEAN PATENT SPECIFICATION

(11) **EP 1 536 980 B1**
(45) Date of publication and mention of the grant of the patent: **23.01.2008**
(21) Application number: 03795530.9
(22) Date of filing: 11.09.2003
(51) Int. Cl.: B60R 9/045

(54) **LOAD CARRIER DEVICE FOR VEHICLES**
LASTTRÄGERVORRICHTUNG FÜR FAHRZEUGE
DISPOSITIF DE PORTE-BAGAGES DESTINE A DES VEHICULES

(30) Priority: 13.09.2002 SE 0202717
(43) Date of publication of application: 08.06.2005
(73) Proprietor: Mont Blanc Industri AB, 516 90 Dalsjöfors (SE)
(72) Inventor: ANDERSSON, Göran, S-504 57 Boras (SE)
(74) Representative: Vink, Charlotta
(86) International application number: PCT/SE2003/001413
(87) International publication number: WO 2004/024506

(56) References cited:
- EP-A1- 0 894 672
- WO-A1-96/22901
- WO-A1-96/24509
- WO-A1-97/11864
- US-A- 5 845 828

## Description

### Technical Field of Invention

The present invention relates to a device in vehicle-mounted load carriers comprising support members for support of said load carrier on a vehicle structure and of a kind wherein each support member has an actuator the effect of which is arranged to simultaneously clamp the support member to the vehicle structure and to the load carrier.

### Background of the Invention

A device of the kind defined in the introduction is previously known e.g. from WO 97/11864. A disadvantage found in this prior-art device is, however, that it comprises a comparatively large number of parts.

EP 0 894 672 describes a device according to the preamble of claim 1.

### Summary of the Invention

The object of the present invention therefore is to provide a device serving the same purpose as the device in EP 0 854 672 but with the aid of fewer parts.

This object is achieved in accordance with the invention in that the device of the kind defined in the introduction has been given the characterising features appearing in the appended claim 1. Preferred embodiments of the transportation device are defined in the dependent claims.

Consequently, the invention concerns a device in vehicle-mounted load carriers according to claim 1.

The use of the so called lever mechanism reduces the number of parts of the device while at the same time ensuring locking of the load carrier to the support member and locking of the support member to the vehicle structure. By load carrier is to be understood herein pipe means primarily having a rectangular cross-sectional configuration but pipe means having different cross-sectional configurations likewise are possible to use in connection with the invention.

Preferably, the expansion takes place along the plane of the pivotal motion upon activation of the actuator in order to provide a simple solution. It is likewise possible to arrange for the expansion to take place in a plane at right angles to the plane of the turning motion or to arrange for a combination of expansion in one plane in parallel with and expansion in another plane at right angles to the plane of the pivotal motion.

According to one version of the invention, locking of the load carrier relative to the support member is achieved by means of an expansion force the effect of which results in oppositely positioned faces in the load-carrier interior being pressed against one another. This arrangement makes the locking of the load carrier somewhat more stable. The feature of pressing against one another oppositely positioned faces in the load-carrier interior could be achieved for instance by forming the end part of said second lever arm with an eccentric means, allowing said part to expand in a predetermined direction upon pivoting.

The support member comprises a portion extending into said load carrier interior via an aperture formed in the load carrier, said support-member portion arranged together with said end part on the second lever arm to bring about said locking effect by exertion of pressure on the face closest to the support member in the load-carrier interior.

Said support-member portion of the support member is formed with a face, which extends obliquely relative to the direction of pull of the actuator, whereby the exertion of pressure is effected upon activation of the actuator by said oblique face acting on said end part on said second lever arm in such a manner that said end part is pressed against the load carrier and in doing so locks the load carrier securely to the support member. In this manner the force of the actuator is directed essentially at right angles away from the direction of pull of the actuator.

In addition, said lever mechanism preferably comprises a fastening portion, in which said actuator is arranged, said actuator comprising a pivot and a threaded part, said activation of the actuator being effected by turning the threaded part relative to the pivot. This solution involves few parts and consequently it is advantageous from an economical as well as from a structural-design aspect.

In order to simplify mounting of the device, the threaded part preferably comprises a grip handle, whereby the threaded part may be turned manually without the aid of tools.

Yet another advantage is achieved by the provision on said support-member portion of a clamping portion to temporarily lock the load carrier to the support member.

### Brief Description of the Drawings

The invention will be described in the following in more detail by means of one embodiment with reference to the accompanying drawings. In the drawings:
Fig 1 is a cross-sectional view as seen from the side, of a device in accordance with the invention in a first position.
Fig 2 is a cross-sectional view as seen from the side, of a device in accordance with the invention in a second position.
Fig 3 is a cross-sectional view as seen from the side, of a device in accordance with the invention in a third position.
Fig 4 is a cross-sectional view as seen from the side, of a device in accordance with the invention in a fourth position.
Fig 5 is a perspective view of a device in accordance with the invention in conjunction with a vehicle structure and a load carrier.

### Detailed Description of Preferred Embodiments

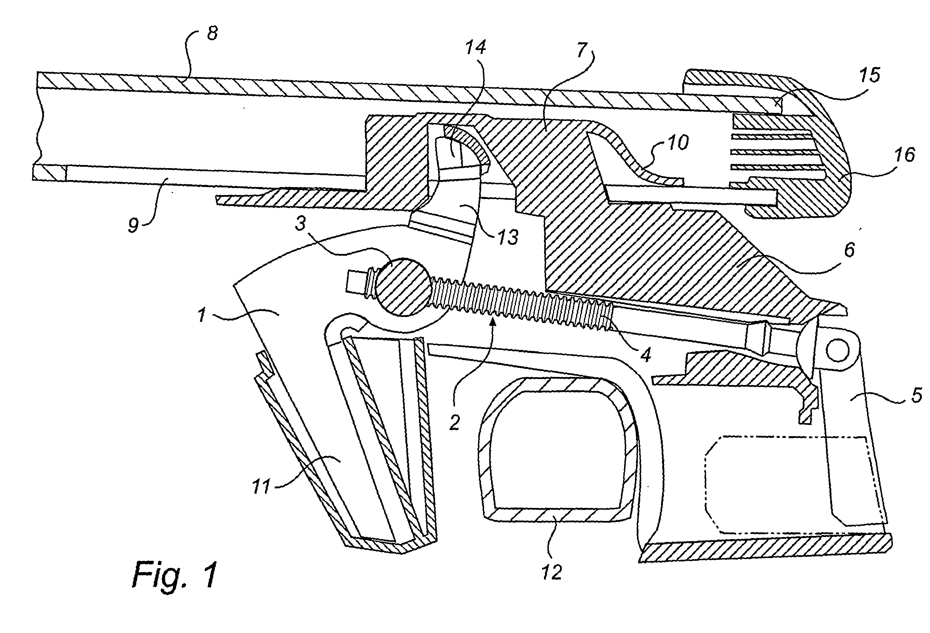

The device in accordance with Fig 1 comprises a lever mechanism 1, which is operated by means of an actuator 2 comprising a pivot 3, a threaded part 4 and a grip handle 5. In addition, the device comprises a support member 6 formed with a portion 7 that extends into the interior of a load carrier 8 via an aperture 9 formed in said load carrier 8. A stop shoulder is formed in the support member 6, which together with the arrangement of the threaded part 4 at the grip handle ensures that the threaded part 4 does not move axially relative to the support member 6. Support-member portion 7 is formed with a clamping portion 10, which serves as a temporary locking means for locking the load carrier 8 to the support member 6. The lever mechanism 1 comprises a first lever arm 11, which is designed to engage the vehicle structure 12 (in this case the vehicle roof-railing) and a second lever arm 13, which is formed with an end part 14. In assembly, portion 7 of the support member 6 together with the end part 14 of said second lever arm 12 is pushed into the load carrier 8 from the load-carrier end 15. For the sake of appearance and in order to minimise the amount of dirt entering into the load carrier 8 a cover 16 is thereafter applied on the load-carrier end 15. When a device in accordance with the invention is to be mounted in position, the device together with the load carrier 8 is placed on top of the vehicle structure 12 as shown in Fig 1.

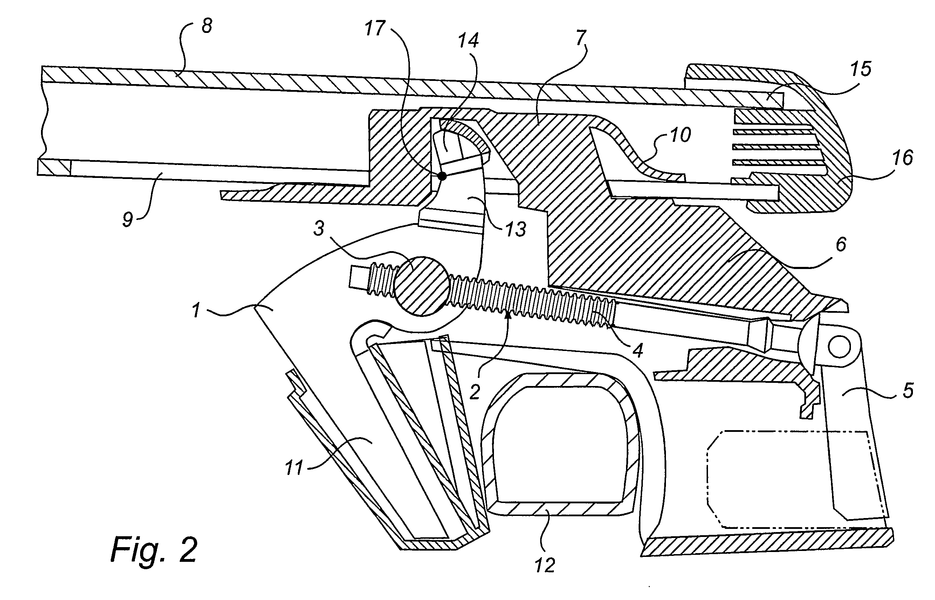

Fig 2 shows the following step, during which the grip handle 5 is manipulated to displace the pivot 3 further onto the threaded part 4 such that the lever mechanism 1 pivots about a point 17 located at the end part of said second lever arm 13 until the first lever arm 11 comes into contact with the vehicle structure 12.

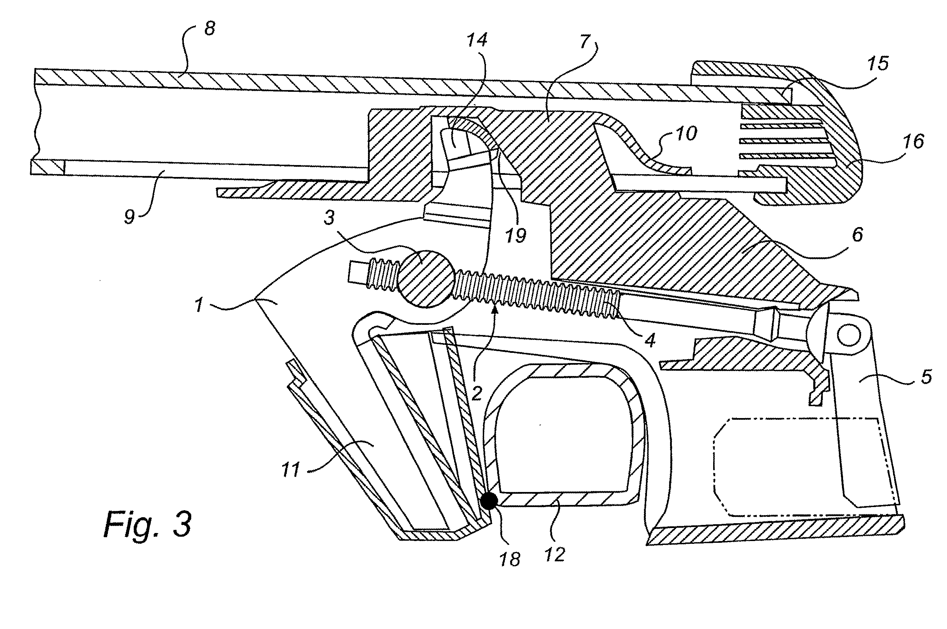

Fig 3 shows the following step, during which the lever mechanism 1 is instead pivoted about a point 18 and wherein further turning movement of the threaded part 4 results in the end part 14 of said second lever arm 13 being moved towards an oblique wall section 19 of said support-member portion 7.

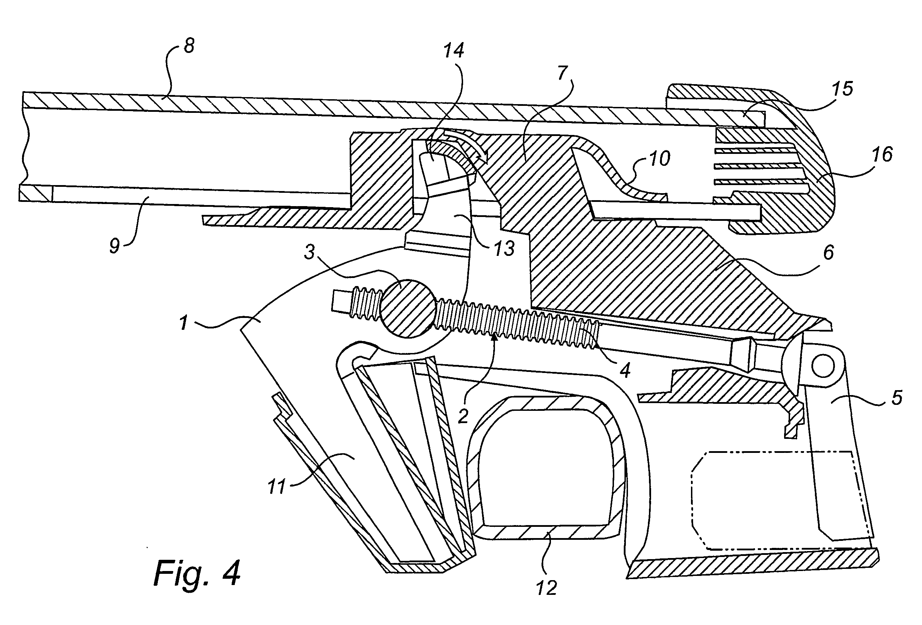

In accordance with a preferred embodiment, said end part 14 has a somewhat rounded shape in order to simplify its sliding in contact with the oblique face 19 as shown in Fig 4. During this last step the load carrier 8 is locked to the support member 6 in that the force of the actuator 2 is re-directed by the oblique face 19. As a result, the end part 14 is pressed against the lower face of the load carrier 8 and which in turn will be pressed against the support member 6 and in this manner lock the load carrier 8 to the support member 6.

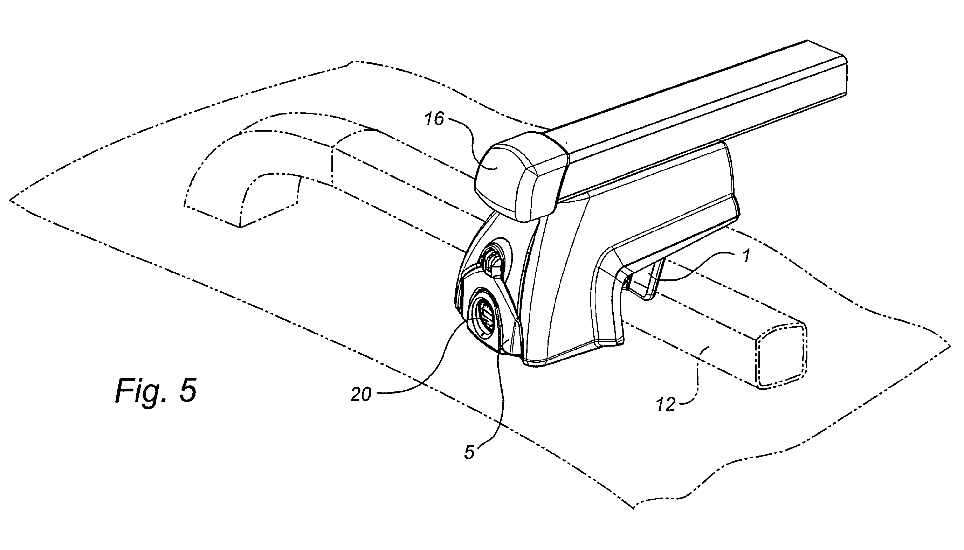

Fig 5 shows a device in accordance with the present invention in a perspective view together with a load carrier, 8 and wherein the support member is arranged on a vehicle structure 12. When the device together with the load carrier 8 is mounted on the vehicle structure 12, the grip handle 5 is folded into a recess in the support member 6. The grip handle could also be secured in the position of transport by means of a lock 20 in order to prevent the device from unintentionally separating from the vehicle structure 12.

It will be appreciated that many modifications of the embodiment of the invention described above are possible within the scope of the invention as the latter is defined in the appended claims.

## Claims

1. A device in vehicle-mounted load carriers (8), said device comprising support members (6) to support said load carriers (8) on a vehicle structure (12) and being of the kind wherein each support member is formed with an actuator (2) the effect of which is arranged to simultaneously clamp the support member (6) to the vehicle structure (12) and to the load carrier (8), wherein said actuator (2) is pivotally connected to a lever mechanism (1) comprising two lever arms (11, 13), the first arm (11) of said lever mechanism (1) being arranged to grippingly engage said vehicle structure (12) and the second lever arm (13) being arranged to securely hold said load carrier (8) upon activation of said actuator (2), said lever mechanism (1) arranged to perform a pivotal motion upon said activation of the actuator (2), which pivotal motion is converted into an expansion force acting crosswise relative to the longitudinal direction of the load carrier (8) at the end part (14) of said second lever arm (13), wherein the support member (6) comprises a portion (7) extending into the interior of said load carrier (8) via an aperture (9) formed in the load carrier (8), said support-member portion (7) arranged together with said end part (14) on the second lever arm (13) to bring about said locking effect by exertion of pressure on the face closest to the support member (6) in the interior of the load-carrier (8) **characterised in that** said member (7) of the support member (6) is formed with a face (19), which extends obliquely relative to the direction of pull of the actuator (2), whereby the exertion of pressure is effected upon activation of the actuator (2) by said oblique face (19) acting on said end part (14) on said second lever arm (13) in such a manner that said end part (14) is pressed against the load carrier (8) and in doing so locks the load carrier (8) securely to the support member (6).

2. A device as claimed in claim 1, wherein said device is arranged such that the expansion takes place along the plane of the pivotal motion upon activation of the actuator (2).

3. A device as claimed in any one of claims 1 or 2, wherein locking of the load carrier (8) relative to the support member (6) is achieved by means of an expansion force the effect of which results in oppositely positioned faces in the load-carrier interior being pressed against one another.

4. A device as claimed in any one of claims 1-3, wherein the support member (6) comprises a portion (7) extending into the interior of said load carrier (8), said support-member portion (7) arranged together with said end part (14) on said second lever arm (13) to press against one another oppositely positioned faces in the interior of said load carrier (8) upon activation of said actuator (2).

5. A device as claimed in any one of the preceding claims, wherein said lever mechanism (1) comprises a fastening portion, in which said actuator (2) is arranged, said actuator comprising a pivot (3) and a threaded part (4), said activation of the actuator (2) being effected by turning the threaded part (4) relative to the pivot (3).

6. A device as claimed in claim 5, wherein the threaded part (4) comprises a grip handle (5) allowing the threaded part (4) to be turned manually without the aid of tools.

7. A device as claimed in any one of claims 1, 4, 5 or 6, wherein said support-member portion (7) comprises a clamping portion (10) for convenient locking of the load carrier (8) to the support member (6).

## Patentansprüche

1. Vorrichtung in auf Fahrzeugen montierten Lastträgern (8), wobei die Vorrichtung Halteelemente (6) umfasst, um die Lastträger (8) auf einem Fahrzeugstruktur (12) zu halten, und derart ausgebildet ist, dass jedes Halteelement mit einem Aktor (2) ausgebildet ist, dessen Wirkung so geregelt ist, dass das Halteelement (6) gleichzeitig an der Fahrzeugstruktur (12) und dem Lastträger (8) befestigt wird, wobei der Aktor (2) drehbar mit einem Hebelmechanismus (1) verbunden ist, der zwei Hebelarme (11, 13) umfasst, wobei der erste Arm (11) des Hebelmechanismus (1) so eingerichtet ist, dass er mit der Fahrzeugstruktur (12) kraftschlüssig verbunden ist, und der zweite Hebelarm (13) so eingerichtet ist, dass er den Lastträger (8) bei Aktivierung des Aktors (2) sicher hält, wobei der Hebelmechanismus (1) so eingerichtet ist, dass er bei Aktivierung des Aktors (2) eine Drehbewegung ausführt, wobei die Drehbewegung in eine Expansionskraft umgewandelt wird, die im Verhältnis zur Längsrichtung des Lastträgers (8) am Endteil (14) des Hebelarms (13) in Querrichtung wirkt, wobei das Halteelement (6) ein Teil (7) umfasst, das sich durch eine in dem Lastträger (8) ausgebildete Öffnung (9) in das Innere des Lastträgers (8) erstreckt, wobei das Halteelementteil (7) mit dem Endteil (14) auf dem zweiten Hebelarm (13) angeordnet ist, um durch Ausübung von Druck auf die dem Halteelement (6) im Inneren des Lastträgers (8) am nächsten gelegene Fläche einen Feststelleffekt/Verriegelungseffekt zu bewirken, **dadurch gekennzeichnet, dass** das Teil (7) des Halteelements (6) mit einer Oberfläche (19) ausgebildet ist, die sich im Verhältnis zur Zugrichtung des Aktors (2) schräg erstreckt, wodurch bei Aktivierung des Aktors (2) Druck ausgeübt wird, und zwar durch die schräge Oberfläche (19), die auf das Endteil (14) an dem zweiten Hebelarm (13) derart einwirkt, dass das Endteil (14) gegen den Lastträger (8) gepresst wird und dadurch den Lastträger (8) sicher am Halteelement (6) befestigt.

2. Vorrichtung nach Anspruch 1, wobei die Vorrichtung so eingerichtet ist, dass die Ausdehnung entlang der Ebene der Drehbewegung bei Aktivierung des Aktors (2) stattfindet.

3. Vorrichtung nach Anspruch 1 oder 2, wobei das Befestigen des Lastträgers (8) in Bezug auf das Halteelement (6) mittels einer Ausdehnungskraft erreicht wird, deren Wirkung darin resultiert, dass einander gegenüber positionierte Oberflächen im Inneren des Lastträgers aneinander gepresst werden.

4. Vorrichtung nach einem der Ansprüche 1 - 3, wobei das Halteelement (6) ein Teil (7) umfasst, das sich in das Innere des Lastträgers (8) erstreckt, wobei das Teil (7) des Halteelements mit dem Endteil (14) auf dem zweiten Hebelarm (13) angeordnet ist, um einander gegenüber angeordnete Oberflächen im Inneren des Lastträgers (8) bei Aktivierung des Aktors (2) aneinander zu pressen.

5. Vorrichtung nach einem der vorhergehenden Ansprüche, wobei der Hebelmechanismus (1) ein Befestigungsteil umfasst, in dem der Aktor (2) angeordnet ist, wobei der Aktor einen Drehzapfen (3) und ein Gewindeteil (4) umfasst, und wobei die Aktivierung des Aktors (2) durch Drehen des Gewindeteils (4) in Bezug auf den Drehzapfen (3) bewirkt wird.

6. Vorrichtung nach Anspruch 5, wobei das Gewindeteil (4) einen Griff (5) umfasst, der ein manuelles Drehen des Gewindeteils (4) ohne Hilfe von Werkzeugen ermöglicht.

7. Vorrichtung nach einem der Ansprüche 1, 4, 5 oder 6, wobei das Teil (7) des Halteelements ein Klemm-/Klammerteil (10) für die bequeme Befestigung des Lastträgers (8) an dem Halteelement (6) umfasst.

## Revendications

1. Dispositif des porte-bagages montés sur des véhicules (8), ledit dispositif comprenant des éléments de support (6) pour supporter lesdits porte-bagages (8) sur une structure de véhicule (12) et étant du type dans lequel chaque élément de support est constitué d'un actionneur (2) qui est agencé pour serrer simultanément l'élément de support (6) sur la structure du véhicule (12) et sur le porte-bagages (8), dans lequel ledit actionneur (12) est relié de manière pivotante à un mécanisme de levier (1) comprenant deux bras de levier (11,13), le premier bras (11) dudit mécanisme de levier (1) étant agencé pour se coincer dans ladite structure de véhicule (12) et le second bras de levier (13) étant agencé pour maintenir fermement ledit porte-bagages (8) à l'activation dudit actionneur (2), ledit mécanisme de levier (1) agencé pour effectuer un pivotement à ladite activation de l'actionneur (2), ce pivotement est converti en une force de dilatation agissant transversalement par rapport à la direction longitudinale du porte-bagages (8) au niveau de la pièce d'extrémité (14) dudit second bras de levier (13), dans lequel l'élément de support (6) comprend une partie (7) s'étendant à l'intérieur dudit porte-bagages (8) via une ouverture (9) formée dans le porte-bagages (8), ladite partie d'élément de support (7) agencée avec ladite pièce d'extrémité (14) sur le second bras de levier (13) pour entraîner l'effet de blocage par l'exercice d'une pression sur la face la plus proche de l'élément de support (6) à l'intérieur du porte-bagages (8), **caractérisé en ce que** ledit élément (7) de l'élément de support (6) est formé d'une face (19), qui s'étend obliquement par rapport à la direction de traction de l'actionneur (2), moyennant quoi l'exercice de la pression est effectué à l'activation de l'actionneur (2) par ladite face oblique (19) agissant sur ladite pièce d'extrémité (14) sur ledit second bras de levier (13) de telle manière que ladite pièce d'extrémité (14) est comprimée contre le porte-bagages (8) et bloque ainsi fermement le porte-bagages (8) sur l'élément de support (6).

2. Dispositif selon la revendication 1, dans lequel ledit dispositif est agencé de sorte que la dilatation a lieu sur le plan du pivotement à l'activation de l'actionneur (2).

3. Dispositif selon l'une quelconque des revendications 1 ou 2, dans lequel le blocage du porte-bagages (8) par rapport à l'élément de support (6) est réalisé au moyen d'une force de dilatation qui entraîne la compression l'une contre l'autre des faces opposées à l'intérieur du porte-bagages.

4. Dispositif selon l'une quelconque des revendications 1 à 3, dans lequel l'élément de support (6) comprend une partie (7) s'étendant à l'intérieur dudit porte-bagages (8), ladite partie d'élément de support (7) agencée avec ladite pièce d'extrémité (14) sur ledit second bras de levier (13) pour comprimer l'une contre l'autre les faces opposées à l'intérieur dudit porte-bagages (8) à l'activation dudit actionneur (2).

5. Dispositif selon l'une quelconque des revendications précédentes, dans lequel ledit mécanisme de levier (1) comprend une partie de fixation, dans laquelle ledit actionneur (2) est agencé, ledit actionneur comprenant un pivot (3) et une pièce filetée (4), ladite activation de l'actionneur (2) étant effectuée en tournant la pièce filetée (4) par rapport au pivot (3).

6. Dispositif selon la revendication 5, dans lequel la pièce filetée (4) comprend une poignée (5) permettant à la pièce filetée (4) d'être tournée manuellement sans l'aide d'outils.

7. Dispositif selon l'une quelconque des revendications 1, 4, 5 ou 6, dans lequel ladite partie d'élément de support (7) comprend une partie de serrage (10) pour un blocage pratique du porte-bagages (8) sur l'élément de support (6).
